(19) Europäisches Patentamt / European Patent Office / Office européen des brevets

(11) **EP 3 992 599 B1**

(12) **EUROPÄISCHE PATENTSCHRIFT**

(45) Veröffentlichungstag und Bekanntmachung des Hinweises auf die Patenterteilung:
**17.01.2024 Patentblatt 2024/03**

(21) Anmeldenummer: **21204282.4**

(22) Anmeldetag: **22.10.2021**

(51) Internationale Patentklassifikation (IPC):
**G01L 3/10** *(2006.01)*

(52) Gemeinsame Patentklassifikation (CPC):
**G01L 3/102**

(54) **MAGNETOELASTISCHER DREHMOMENTSENSOR**

MAGNETOELASTIC TORQUE SENSOR

CAPTEUR MAGNÉTO-ÉLASTIQUE DE COUPLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2020 DE 102020213671**

(43) Veröffentlichungstag der Anmeldung:
**04.05.2022 Patentblatt 2022/18**

(73) Patentinhaber: **Robert Bosch GmbH**
**70442 Stuttgart (DE)**

(72) Erfinder:
• **Breitfeld, Andreas**
  **70567 Stuttgart (DE)**
• **Ossmann, Christoph**
  **72768 Reutlingen (DE)**
• **Zegowitz, Michael**
  **72070 Tuebingen (DE)**
• **Schatz, Frank**
  **70806 Kornwestheim (DE)**
• **Schickle, Sven**
  **72070 Tuebingen (DE)**

(56) Entgegenhaltungen:
**EP-A1- 3 232 172     EP-A1- 3 708 988**
**WO-A1-02/068922**

EP 3 992 599 B1

**Beschreibung**

Stand der Technik

Die vorliegende Erfindung betrifft einen magnetoelastischen Drehmomentsensor zum Messen eines Drehmoments sowie ein Fahrzeug, insbesondere ein elektrisch und/oder mittels Muskelkraft antreibbares Fahrzeug, welches einen magnetoelastischen Drehmomentsensor aufweist.

Ein magnetoelastischer Drehmomentsensor mit einer teilweise magnetisierten Welle ist seit vielen Jahren bekannt. Bei einer Drehmomentbelastung der Welle entsteht ein Magnetfeld im Bereich außerhalb der Welle, welches an jeder Stelle proportional zum auf die Welle ausgeübten Drehmoment ist und mittels Magnetfeldsensoren des Drehmomentsensors gemessen werden kann. Die Messung des Magnetfeldes ermöglicht daher die Bestimmung des Drehmomentes. Eine ideale Drehmomentmessung ist damit aber nur möglich, wenn keine weiteren Magnetfelder, die nicht durch das Drehmoment erzeugt wurden, vorhanden sind. Diesbezüglich kennt der Stand der Technik magnetoelastische Drehmomentsensoren, die jeweils eine Welle mit zwei magnetisierten Bereichen zur Kompensierung von homogenen magnetischen Störfeldern oder eine Welle mit drei magnetisierten Bereichen zur Kompensierung von linearen magnetischen Störfeldern aufweisen. Solche Drehmomentsensoren sind aus WO02068922, EP3232172 und EP3708988 bekannt.

Offenbarung der Erfindung

Der erfindungsgemäße magnetoelastische Drehmomentsensor weist den Vorteil eines besonders kompakten Aufbaus auf, da zum Bestimmen eines Drehmoments eine relativ geringe Anzahl von Magnetfeldsensoren erforderlich ist. Hierfür umfasst der erfindungsgemäße magnetoelastische Drehmomentsensor eine Welle mit einem magnetisierten Bereich, einen ersten Magnetfeldsensor und einen zweiten Magnetfeldsensor. Dabei weist die Welle eine Axialrichtung, eine Radialrichtung und eine Umfangsrichtung auf. Der erste Magnetfeldsensor und der zweite Magnetfeldsensor, die jeweils eingerichtet sind, eine Stärke eines Magnetfeldes zu messen, sind in der Axialrichtung und der Umfangsrichtung relativ zur Welle an derselben Position angeordnet. Der erste Magnetfeldsensor ist in der Radialrichtung in einem ersten Abstand zu einer Wellenmantelfläche angeordnet, wobei der zweite Magnetfeldsensor in der Radialrichtung in einem zweiten Abstand zu der Wellenmantelfläche angeordnet ist. Hierbei ist der erste Abstand kleiner als der zweite Abstand. Mit anderen Worten sind der erste Magnetfeldsensor und der zweite Magnetfeldsensor in der Radialrichtung relativ zu einer Wellenmantelfläche an unterschiedlichen Positionen angeordnet, wobei der erste Magnetfeldsensor und der zweite Magnetfeldsensor voneinander und von der Welle bzw. der Wellenmantelfläche beabstandet sind. Es sei angemerkt, dass das Magnetfeld, dessen Stärke durch den ersten Magnetfeldsensor und den zweiten Magnetfeldsensor an deren jeweiliger Position gemessen werden kann, insbesondere ein Magnetfeld umfassen kann, welches bei einer Drehmomentbelastung der Welle bzw. des magnetisierten Bereichs durch den magnetisierten Bereich entsteht. Anders gesagt sind der erste Magnetfeldsensor und der zweite Magnetfeldsensor jeweils eingerichtet, eine Stärke eines Magnetfeldes, welches bei einer Drehmomentbelastung der Welle bzw. des magnetisierten Bereichs entsteht, an deren jeweiliger Position zu messen. Dabei ist die Stärke des Magnetfeldes des magnetisierten Bereichs an jeder Stelle proportional zum auf die Welle aufgebrachten Drehmoment. Das Messen der Stärke des Magnetfeldes des magnetisierten Bereichs ermöglicht daher die Bestimmung des Drehmomentes. Das Magnetfeld, dessen Stärke vom ersten Magnetfeldsensor und dem zweiten Magnetfeldsensor messbar ist, kann ferner ein Magnetstörfeld im Umfeld der Welle umfassen. Somit kann bei einer Drehmomentbelastung der Welle jeder Magnetfeldsensor an seiner jeweiligen Position die Stärke des Magnetfeldes des magnetisierten Bereichs oder eine Stärke eines Magnetfeldes messen, welches eine Überlappung des Magnetfeldes des magnetisierten Bereichs mit einem Magnetstörfeld ist. Aufgrund der vorgeschlagenen Anordnung der Magnetfeldsensoren relativ zur Welle und zueinander können die Messungen der beiden Magnetfeldsensoren derart verwendet werden, dass mittels des magnetoelastischen Drehmomentsensors sowohl ein auf die Welle wirkendes Drehmoment gemessen als auch ein Magnetstörfeld im Umfeld des magnetoelastischen Drehmomentsensors kompensiert sowie gemessen werden kann. Insbesondere können mittels des magnetoelastischen Drehmomentsensors homogene Störfelder gemessen und kompensiert werden. Es sei des Weiteren angemerkt, dass der magnetisierte Bereich der Welle einen aufmagnetisierten Bereich in der Welle und/oder eine zusätzliche magnetisierte Komponente, die auf der Welle aufgebracht ist, umfassen kann. Unter "Abstand" zwischen zwei Komponenten ist im Rahmen der Erfindung der lichte Abstand zu verstehen. Weiterhin bedeutet die Formulierung, dass die Welle eine Axialrichtung, eine Radialrichtung und eine Umfangsrichtung aufweist, insbesondere, dass durch die Welle eine Axialrichtung, eine Radialrichtung und eine Umfangsrichtung definiert sind. Die Axialrichtung entspricht im Rahmen der Erfindung insbesondere einer Richtung einer Längsachse bzw. Mittelachse der Welle. Die Radialrichtung entspricht insbesondere einer Richtung, welche rechtwinklig zur Mittelachse steht und von der Mittelachse auf die Wellenmantelfläche zuläuft. Die Umfangsrichtung entspricht insbesondere einer Richtung, welche um die Mittelachse umläuft.

Die Unteransprüche zeigen bevorzugte Weiterbildungen der Erfindung.

Nach einer bevorzugten Ausgestaltung der vorliegenden Erfindung weist die Welle des magnetoelastischen Drehmomentsensors neben dem zuvor beschriebenen magnetisieren Bereich, der als erster magnetisierter Bereich bezeichnet wird, einen zusätzlichen magnetisierten Bereich auf, der als zweiter magnetisierter Bereich bezeichnet wird. Der erste magnetisierte Bereich und der zweite magnetisierte Bereich weisen entgegengesetzte Magnetisierungen auf. Ferner umfasst der magnetoelastische Drehmomentsensor einen dritten Magnetfeldsensor und einen vierten Magnetfeldsensor, die jeweils eingerichtet sind, eine Stärke eines Magnetfeldes zu erfassen. Dabei sind der erste Magnetfeldsensor und der zweite Magnetfeldsensor dem ersten magnetisierten Bereich zugeordnet, wobei der dritte Magnetfeldsensor und der vierte Magnetfeldsensor dem zweiten magnetisierten Bereich zugeordnet sind. Der dritte Magnetfeldsensor und der vierte Magnetfeldsensor sind in der Axialrichtung und der Umfangsrichtung relativ zur Welle an derselben Position angeordnet. Der dritte Magnetfeldsensor ist in der Radialrichtung in einem dritten Abstand zu der Wellenmantelfläche angeordnet. Der vierte Magnetfeldsensor ist in der Radialrichtung in einem vierten Abstand zu der Wellenmantelfläche angeordnet, wobei der dritte Abstand kleiner als der vierte Abstand ist. Anders gesagt sind der dritte Magnetfeldsensor und der vierte Magnetfeldsensor in der Radialrichtung relativ zu einer Wellenmantelfläche an unterschiedlichen Positionen angeordnet, wobei der dritte Magnetfeldsensor und der vierte Magnetfeldsensor voneinander und von der Welle bzw. der Wellenmantelfläche beabstandet sind. Das Magnetfeld, dessen Stärke durch den dritten Magnetfeldsensor und den vierten Magnetfeldsensor an deren jeweiliger Position gemessen werden kann, kann insbesondere ein Magnetfeld umfassen, welches bei einer Drehmomentbelastung der Welle bzw. des zweiten magnetisierten Bereichs durch den zweiten magnetisierten Bereich entsteht. Somit können bei einer Drehmomentbelastung der Welle der dritte Magnetfeldsensor und der vierte Magnetfeldsensor an ihrer jeweiligen Position die Stärke des Magnetfeldes des zweiten magnetisierten Bereichs oder eine Stärke eines Magnetfeldes messen, welches eine Überlappung des Magnetfeldes des zweiten magnetisierten Bereichs mit einem Magnetstörfeld ist. Analog zum (ersten) magnetisierten Bereich kann auch der weitere (zweite) magnetisierte Bereich der Welle einen aufmagnetisierten Bereich in der Welle und/oder eine zusätzliche magnetisierte Komponente, die auf der Welle aufgebracht ist, umfassen. Das Vorsehen des dritten Magnetfeldsensors und des vierten Magnetfeldsensors und deren Anordnung relativ zueinander, zu dem ersten Magnetfeldsensor, dem zweiten Magnetfeldsensor und zur Welle bieten den Vorteil, dass die Messungen der Magnetfeldsensoren zur Bestimmung des Drehmoments sowie zur Kompensierung und Bestimmung eines Magnetstörfeldes im Umfeld der Welle benutzt werden können. Insbesondere können durch den magnetoelastischen Drehmomentsensor Magnetstörfeldgradienten gemessen und kompensiert werden. Im Rahmen der vorliegenden Erfindung kann die Stärke eines Magnetfeldes insbesondere als magnetische Flussdichte des Magnetfeldes sein.

In vorteilhafter Weise sind die Magnituden der Magnetisierungen des ersten magnetisierten Bereichs und des zweiten magnetisierten Bereichs gleich groß.

Vorzugsweise ist in der Umfangsrichtung eine Position des dritten Magnetfeldsensors und des vierten Magnetfeldsensors relativ zur Welle gleich mit einer Position des ersten Magnetfeldsensors und des zweiten Magnetfeldsensors relativ zur Welle.

Ferner bevorzugt sind in der Axialrichtung eine Position des dritten Magnetfeldsensors und des vierten Magnetfeldsensors relativ zur Welle und eine Position des ersten Magnetfeldsensors und des zweiten Magnetfeldsensors relativ zur Welle unterschiedlich voneinander.

Insbesondere können der erste Magnetfeldsensor und der zweite Magnetfeldsensor ein erstes Magnetfeldsensorpaar bilden. Entsprechend können der dritte Magnetfeldsensor und der vierte Magnetfeldsensor insbesondere ein zweites Magnetfeldsensorpaar bilden. Dabei ist das erste Magnetfeldsensorpaar dem ersten magnetisierten Bereich der Welle zugeordnet. Entsprechend ist das zweite Magnetfeldsensorpaar dem zweiten magnetisierten Magnetfeldsensor zugeordnet.

Der magnetisierte (erste) Bereich und/oder der weitere (zweite) magnetisierte Bereich weist/weisen in der Axialrichtung der Welle vorzugsweise eine Breite von 5 mm bis 10 mm auf. Somit kann/können der erste magnetisierte Bereich und/oder der zweite magnetisierte Bereich besonders stabil und reproduzierbar magnetisiert werden.

Der erste Magnetfeldsensor und der zweite Magnetfeldsensor sind vorzugsweise gleich ausgebildet. Entsprechend sind vorzugsweise der dritte Magnetfeldsensor und der vierte Magnetfeldsensor gleich ausgebildet. Insbesondere sind alle Magnetfeldsensoren gleich ausgebildet.

Bevorzugt beträgt ein Abstand zwischen dem ersten Magnetfeldsensor und dem zweiten Magnetfeldsensor 1 mm bis 5 mm, ferner bevorzugt 1,5 bis 2,5 mm, besonders bevorzugt 2 mm. Mit anderen Worten beträgt eine Differenz des ersten Abstands vom zweiten Abstand bevorzugt zwischen 1 mm und 5 mm, ferner bevorzugt zwischen 1,5 und 2,5 mm, besonders bevorzugt 2 mm.

Entsprechend beträgt ein Abstand zwischen dem dritten Magnetfeldsensor und dem vierten Magnetfeldsensor bevorzugt 1 mm bis 5 mm, ferner bevorzugt 1,5 bis 2,5 mm, besonders bevorzugt 2 mm. Mit anderen Worten beträgt eine Differenz des dritten Abstands vom vierten Abstand bevorzugt zwischen 1 mm und 5 mm, ferner bevorzugt zwischen 1,5 und 2,5 mm, besonders bevorzugt 2 mm.

Vorzugsweise beträgt der erste Abstand 0,1 mm bis 1,5 mm, bevorzugt 0,5 mm bis 1,5 mm. Entsprechend beträgt der dritte Abstand vorzugsweise 0,1 mm bis 1,5, bevorzugt 0,5 mm bis 1,5 mm.

Bevorzugt beträgt der zweite Abstand 1,5 mm bis 6,5 mm. Entsprechend beträgt der vierte Abstand vorzugsweise 1,5 mm bis 6,5 mm.

Vorteilhafterweise ist der erste Abstand gleich mit dem dritten Abstand.

Entsprechend kann der zweite Abstand in vorteilhafter Weise gleich mit dem vierten Abstand gewählt sein.

Wenn der erste Abstand gleich mit dem dritten Abstand und der zweite Abstand gleich mit dem vierten Abstand sind, ist In vorteilhafter Weise der Abstand zwischen dem ersten Magnetfeldsensor und dem zweiten Magnetfeldsensor gleich mit dem Abstand zwischen dem dritten Magnetfeldsensor und dem vierten Magnetfeldsensor.

Vorzugsweise sind der erste Magnetfeldsensor und der zweite Magnetfeldsensor (erstes Magnetfeldsensorpaar) in Umfangsrichtung relativ zur Welle an derselben Position mit dem dritten Magnetfeldsensor und dem vierten Magnetfeldsensor (zweites Magnetfeldsensorpaar). Mit anderen Worten ist das erste Magnetfeldsensorpaar ohne Winkelversatz zum zweiten Magnetfeldsensorpaar angeordnet.

Der erste Magnetfeldsensor und/oder der zweite Magnetfeldsensor und/oder der dritte Magnetfeldsensor und/oder der vierte Magnetfeldsensor kann/können jeweils beispielsweise als Hall-Sensor, AMR-Sensor (Sensor auf Basis des AMR-Effektes; anisotroper magnetoresistiver Effekt), GMR-Sensor (Sensor auf Basis des GMR-Effektes; Riesenmagnetowiderstands-Sensor), Fluxgate-Magnetometer, TMR-Sensor (Tunnel-Magnetoresistiv-Sensor) oder Induktionsspule ausgebildet sein.

Im Rahmen der Erfindung kann der Begriff "magnetisierter Bereich" insbesondere als "magnetische Spur" bezeichnet werden.

Es sei angemerkt, dass es beim vorgeschlagenen magnetoelastischen Drehmomentsensor zum Kompensieren von Magnetstörfeldern ausreicht, wenn die Welle maximal einen magnetisierten Bereich oder maximal zwei magnetisierte Bereiche aufweist. Mit anderen Worten kann die Welle des vorgeschlagenen magnetoelastischen Sensors nur einen magnetisierten Bereich oder nur zwei magnetisierte Bereiche aufweisen.

Ferner betrifft die vorliegende Erfindung ein Fahrzeug, welches einen zuvor beschriebenen magnetoelastischen Drehmomentsensor umfasst.

Insbesondere ist das Fahrzeug elektrisch und/oder mit Muskelkraft betreibbar. Besonders bevorzugt ist das Fahrzeug ein Elektrofahrrad.

Vorzugsweise weist das elektrisch und/oder mit Muskelkraft betreibbare Fahrzeug einen Kurbeltrieb auf, an dem der magnetoelastische Drehmomentsensor angeordnet ist. Dabei ist der magnetoelastische Drehmomentsensor insbesondere eingerichtet, ein von einem Fahrer über seine Muskelkraft auf den Kurbeltrieb aufgebrachtes Drehmoment zu erfassen.

Ferner betrifft die Erfindung ein Verfahren zum Bestimmen eines Drehmoments mittels des zuvor beschriebenen magnetoelastischen Drehmomentsensors. Das Verfahren umfasst die Schritte des Erfassens eines ersten Messsignals des ersten Magnetfeldsensors, des Erfassens eines zweiten Messsignals des zweiten Magnetfeldsensors und des Bestimmens des Drehmoments gemäß der Formel

$$M1 = MS1 - ((MS1 - k* MS2)/(1-k))$$

, wenn ein homogenes Magnetstörfeld in einem Umfeld der Welle bzw. des magnetoelastischen Drehmomentsensors existiert. Dabei sind "M1" das zu bestimmende Drehmoment, "MS1" das erste Messsignal des ersten Magnetfeldsensors, "MS2" das zweite Messsignal des zweiten Magnetfeldsensors und "k" ein vorbestimmter Faktor, wobei der vorbestimmte Faktor "k" von der relativen Anordnung des ersten Magnetfeldsensors und des zweiten Magnetfeldsensors zueinander abhängig ist. M1, MS1 und MS2 sind in einer eine Stärke eines Magnetfeldes bezeichnenden Einheit, beispielsweise $\mu$T, ausgedrückt. Dabei ist das Drehmoment M1 als eine Magnetstärke des durch den magnetisierten Bereich entstehenden Magnetfeldes ausgedrückt, da diese Magnetstärke analog zum auf die Welle aufgebrachten Drehmoment ist. Somit kann das auf die Welle aufgebrachte Drehmoment aus der Magnetstärke des Magnetfeldes an der Position des ersten Magnetfeldsensors berechnet werden.

Ferner betrifft die Erfindung ein Verfahren zum Bestimmen einer Stärke eines homogenen Magnetstörfeldes in einem Umfeld der Welle bzw. des magnetoelastischen Drehmomentsensors bei einer Drehmomentbelastung der Welle mittels eines zuvor beschriebenen magnetoelastischen Drehmomentsensors. Das Verfahren umfasst das Erfassen eines ersten Messsignals des ersten Magnetfeldsensors und eines zweiten Messsignals des zweiten Magnetfeldsensors des magnetoelastischen Drehmomentsensors. Die Stärke des homogenen Magnetstörfeldes wird gemäß der Formel

$$S = (MS1 - k * MS2)/(1- k)$$

berechnet, wobei "S" die Stärke des homogenen Magnetstörfeldes, "MS1" das erste Messsignal des ersten Magnetfeldsensors, "MS2" das zweite Messsignal des zweiten Magnetfeldsensors und "k" ein vorbestimmter Faktor sind, wobei der vorbestimmte Faktor "k" von der relativen Anordnung des ersten Magnetfeldsensors und des zweiten Magnetfeldsensors zueinander, insbesondere einem Abstand zwischen dem ersten Magnetfeldsensor und dem zweiten Magnetfeldsensor, abhängig ist.

Der vorbestimmte Faktor "k" entspricht in vorteilhafter Weise einem Verhältnis der Stärke eines störfeldfreien Magnetfeldes an der Position des ersten Magnetfeldsensors zu der Stärke des störfeldfreien Magnetfeldes an der Position des zweiten Magnetfeldsensors.

Es sei angemerkt, dass das homogene Magnetstörfeld im Umfeld der Welle insbesondere im Bereich des ersten Magnetfeldsensors und des zweiten Magnetfeldsensors homogen ist. Dies bedeutet mit anderen Worten, dass eine Stärke des Magnetstörfelds an der Position des ersten Magnetfeldsensors gleich mit einer Stärke des Magnetstörfelds an der Position des zweiten Magnetfeldsensors ist.

Wenn im Umfeld der Welle des magnetoelastischen Drehmomentsensors ein Magnetstörfeldgradient vorhanden ist, kann zum Berechnen eines Drehmoments ein zuvor beschriebener magnetoelastischer Drehmomentsensor mit einem ersten und einem zweiten magnetisierten Bereich und mit einem ersten, einem zweiten, einem dritten und einem vierten Magnetfeldsensor benutzt werden.

Dazu werden ein erstes Messsignal des ersten Magnetfeldsensors, ein zweites Messsignal des zweiten Magnetfeldsensors, ein drittes Messsignal des dritten Magnetfeldsensors und ein viertes Messsignal des vierten Magnetfeldsensors des magnetoelastischen Drehmomentsensors erfasst. Das Drehmoment aus dem ersten Magnetfeldsensor wird gemäß der Formel

$$M1 = MS1 - ((MS1 - k* MS2) /(1-k)) - (MS3 - ((MS3 - k* MS4) /(1-k)))$$

berechnet, wobei der Magnetstörfeldgradient zwischen der Position des ersten Magnetfeldsensors und der Position des zweiten Magnetfeldsensors und zwischen der Position des dritten Magnetfeldsensors und des vierten Magnetfeldsensors gleich ist. Mit anderen Worten ist der Magnetfeldstörfeldgradient homogen zwischen dem Bereich des Paares aus dem ersten Magnetfeldsensor und dem zweiten Magnetfeldsensor und dem Bereich des Paares aus dem dritten Magnetfeldsensor und dem vierten Magnetfeldsensor. Dabei sind "M1" das Drehmoment, "MS1" das erste Messsignal des ersten Magnetfeldsensors, "MS2" das zweite Messsignal des zweiten Magnetfeldsensors, "MS3" das dritte Messsignal des dritten Magnetfeldsensors, "MS4" das Messsignal des vierten Magnetfeldsensors und "k" ein vorbestimmter Faktor, wobei der vorbestimmte Faktor "k" von der relativen Anordnung des ersten Magnetfeldsensors und des zweiten Magnetfeldsensors zueinander und/oder der relativen Anordnung des dritten Magnetfeldsensors und des vierten Magnetfeldsensors zueinander abhängig ist. M1, MS1 und MS2, MS3 und MS4 sind in einer eine Stärke eines Magnetfeldes definierenden Einheit, beispielsweise $\mu$T, ausgedrückt. Dabei ist das Drehmoment M 1 als eine Magnetstärke des durch den magnetisierten Bereich entstehenden Magnetfeldes ausgedrückt, da diese Magnetstärke analog zum auf die Welle aufgebrachten Drehmoment ist. Somit kann das auf die Welle aufgebrachte Drehmoment aus der Magnetstärke des Magnetfeldes an der Position des ersten Magnetfeldsensors berechnet werden.

Der vorbestimmte Faktor "k" entspricht in vorteilhafter Weise einem Verhältnis der Stärke eines störfeldfreien Magnetfeldes an der Position des ersten Magnetfeldsensors zu der Stärke des störfeldfreien Magnetfeldes an der Position des zweiten Magnetfeldsensors und/oder einem Verhältnis der Stärke des störfeldfreien Magnetfeldes an der Position des dritten Magnetfeldsensors zu der Stärke des störfeldfreien Magnetfeldes an der Position des vierten Magnetfeldsensors.

Der magnetoelastische Drehmomentsensor der vorliegenden Erfindung ist in vorteilhafter Weise eingerichtet, je nach Ausgestaltung das Drehmoment und/oder die Stärke eines homogenen Magnetstörfeldes gemäß der jeweiligen zuvor beschriebenen Formel zu berechnen. Dazu kann der magnetoelastische Drehmomentsensor ferner bevorzugt eine Auswerteeinheit umfassen. Die Auswerteeinheit ist dabei vorzugsweise eingerichtet, die jeweiligen zuvor beschriebenen Messsignale zu erfassen und diese gemäß den oben angegebenen Formeln zum Berechnen des Drehmoments und/oder der Stärke eines homogenen Magnetstörfeldes zu kombinieren.

Der beanspruchte magnetoelastische Drehmomentsensor kann vorteilhafterweise auch in Verbindung mit einer Tretachse, die den wenigstens einen magnetisierten Bereich aufweist, insbesondere eines Zweirads, z.B. eines Elektrofahrrads, verwendet werden. Dabei kann der Drehmomentsensor separat zur Tretachse, z.B. am Rahmen des Zweirads oder auch integraler Bestandteil der Tretachse angeordnet sein. So ist denkbar, den Drehmomentsensor als Teil der Hülse des Rahmens vorzusehen, in der die Tretachse aufgenommen wird. Es ist jedoch auch denkbar, den Drehmomentsensor als eine Art Hülse um die Tretachse vorzusehen, die in die Aufnahme der Tretachse am Rahmen eingeschoben wird. Denkbar ist dabei, dass der Drehmomentsensor als gesondertes Teil um die Tretachse aufgeschoben wird oder ein integrales oder ein einstückiges Teil mit der Tretachse bildet.

Weiterhin kann bei einem Fahrzeug mit einer Antriebseinheit, z.B. einem Elektrofahrrad, vorgesehen sein, dass der Drehmomentsensor im Bereich der Antriebseinheit angeordnet ist, wobei die Tretachse mit dem wenigstens einen magnetisierten Bereich in oder an die Antriebseinheit angebaut werden kann. Dabei kann vorgesehen sein, dass der Drehmomentsensor als Anbauteil in oder an die Antriebseinheit eingebaut oder angebaut wird. Es ist jedoch auch möglich, dass der Drehmomentsensor einstückig mit der Antriebseinheit insbesondere deren Gehäuse verbunden ist.

Kurze Beschreibung der Zeichnungen

Nachfolgend werden Ausführungsbeispiele der Erfindung unter Bezugnahme auf die begleitende Zeichnung im Detail beschrieben, wobei gleiche bzw. funktional gleiche Bauteile jeweils mit dem gleichen Bezugszeichen bezeichnet sind. In der Zeichnung ist:

Figur 1     eine schematische vereinfachte Ansicht eines magnetoelastischen Drehmomentsensors gemäß einem ersten Ausführungsbeispiel der vorliegenden Erfindung,

Figur 2     eine schematische vereinfachte Ansicht des magnetoelastischen Drehmomentsensors aus Figur 2 bei einer Drehmomentbelastung,

Figur 3     ein Diagramm einer Stärke eines beispielhaften Magnetfeldes im Umfeld einer Welle des magnetoelastischen Drehmomentsensors in Abhängigkeit von einem Abstand von einer Wellenmantelfläche,

Figur 4     eine schematische vereinfachte Ansicht eines magnetoelastischen Drehmomentsensors gemäß einem zweiten Ausführungsbeispiel der vorliegenden Erfindung,

Figur 5     eine schematische vereinfachte Ansicht eines Elektrofahrrades, welches einen magnetoelastischen Drehmomentsensor aus Figur 1 oder Figur 4 aufweist.

Ausführungsformen der Erfindung

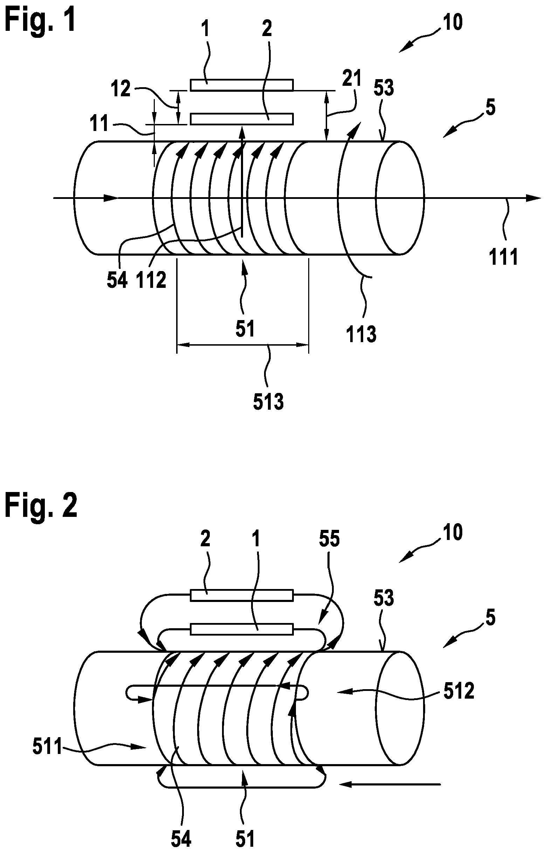

Nachfolgend wird unter Bezugnahme auf die Figuren 1 und 2 ein magnetoelastischer Drehmomentsensor 10 gemäß einem ersten Ausführungsbeispiel der Erfindung im Detail beschrieben.

Wie aus Figur 1 ersichtlich ist, weist der magnetoelastische Drehmomentsensor 10 eine Welle 5, einen ersten Magnetfeldsensor 1 und einen Magnetfeldsensor 2 auf.

In der Welle 5, die in vorteilhafter Weise kreiszylinderförmig ausgebildet ist, ist ein magnetisierter Bereich 51 gebildet. Mit anderen Worten entspricht der magnetisierte Bereich 51 einem Teil der Welle 5, das magnetisiert worden ist. Es ist allerdings auch möglich, dass der magnetisierte Bereich 51 durch eine zusätzliche, die Welle umgebende magnetisierte Komponente, insbesondere durch einen magnetisierten Ring, bereitgestellt wird.

Der magnetisierte Bereich 51 weist in der Längsrichtung 111 der Welle 5 eine Breite 513 auf, die zwischen 5 mm und 10 mm beträgt.

Durch die Welle 5 ist eine Axialrichtung 111, eine Radialrichtung 112 und eine Umfangsrichtung 113 definiert. Die Axialrichtung 111, die Radialrichtung 112 und die Umfangsrichtung 113 können im Rahmen der Erfindung auch als eine Axialrichtung, eine Radialrichtung und eine Umfangsrichtung des magnetoelastischen Drehmomentsensors 10 bezeichnet werden.

Aus Figur 1 ergibt sich ferner, dass der erste Magnetfeldsensor 1 und der zweite Magnetfeldsensor 2 in der Axialrichtung 111 und der Umfangsrichtung 113 relativ zur Welle 5 an derselben Position angeordnet sind. In der Radialrichtung 112 sind der erste Magnetfeldsensor 1 und der zweite Magnetfeldsensor 2 an relativ zur Welle 5 unterschiedlichen Positionen angeordnet.

Insbesondere ist der erste Magnetfeldsensor 1 in einem ersten Abstand 11 zu einer Wellenmantelfläche 53 angeordnet. Entsprechend ist der zweite Magnetfeldsensor 2 in einem zweiten Abstand 21 zu der Wellenmantelfläche 53 angeordnet. Dabei ist der erste Abstand 11 kleiner als der zweite Abstand 21.

Das heißt, dass der erste Magnetfeldsensor 1 und der zweite Magnetfeldsensor 2 voneinander und von der Wellenmantelfläche 53 beabstandet sind.

Insbesondere beträgt der erste Abstand 11 0,1 mm bis 1,5 mm. Der zweite Abstand 21 beträgt insbesondere 1,5 mm bis 6,5 mm. Dabei beträgt ein Abstand 12 zwischen dem ersten Magnetfeldsensor 1 und dem zweiten Magnetfeldsensor 2 1 mm bis 5 mm, bevorzugt 1,5 mm bis 2,5 mm, besonders bevorzugt 2 mm.

Der erste Magnetfeldsensor 1 und der zweite Magnetfeldsensor 2 sind jeweils eingerichtet, eine Stärke bzw. eine magnetische Flussdichte eines Magnetfeldes im Umfeld der Welle 5 zu erfassen.

Das Magnetfeld im Umfeld der Welle 5 kann insbesondere ein Magnetfeld 55 umfassen, welches bei einer Drehmomentbelastung der Welle 5 bzw. des magnetisierten Bereichs 51 entsteht. Das Magnetfeld 55 ist in Figur 2 gezeigt. Wie das Magnetfeld 55 entsteht, wird im Folgenden anhand der Figuren 1 und 2 erklärt.

In Figur 1 ist der magnetoelastische Drehmomentsensor 10 ohne Drehmomentbelastung der Welle 5 dargestellt.

Der magnetisierte Bereich 51 in der Welle 50 hat dabei geschlossene Feldlinien 54, die in der Welle 51 in der Umfangsrichtung 113 verlaufen.

Auf der anderen Seite ist in Figur 2 der magnetoelastische Drehmomentsensor 10 bei einer Drehmomentbelastung der Welle 5 dargestellt. Ein auf die Welle 5 bzw. den magnetisierten Bereich 51 ausgeübtes Drehmoment führt zu mechanischem Stress in der Welle 5. Durch die magnetoelastische Wechselwirkung, die im magnetisierten Bereich 51 der Welle 5 auftritt, werden die Feldlinien 54 in die Stressrichtung gedreht. Dadurch verlaufen die Feldlinien 54 schraubenförmig um die Welle 5 herum. Das Resultat ist, dass die an einem Ende 512 des magnetisierten Bereiches 51 ankommenden Feldlinien 54 die Welle 5 verlassen und auf einen Anfang 511 des magnetisierten Bereiches 51 zurückgehen. Dadurch entsteht im Bereich außerhalb der Welle 5 das Magnetfeld 55, das immer der Welle 5 entlang orientiert ist. Exakt in der Mitte des magnetisierten Bereiches 51 ist das Magnetfeld 55 parallel zur Welle 5, wohingegen in den Randbereichen des magnetisierten Bereiches 51 der Anteil senkrecht aus der Welle 5 heraus immer größer wird.

Wenn das Magnetfeld 55 das einzige Magnetfeld im Umfeld der Welle 5 ist, kann eine Stärke des Magnetfeldes 55 an der Position des ersten Magnetfeldsensors 1 durch den ersten Magnetfeldsensor 1 erfasst werden. Entsprechend kann eine Stärke des Magnetfeldes 55 an der Position des zweiten Magnetfeldsensors 2 durch den zweiten Magnetfeldsensor 2 erfasst werden. Aus der Stärke des Magnetfeldes 55 an der Position des ersten Magnetfeldsensors 1 und der Stärke des Magnetfeldes 55 an der Position des zweiten Magnetfeldsensors 2 kann in vorteilhafter Weise ein Faktor "k" berechnet werden. Insbesondere kann der Faktor "k", der als vorbestimmter Faktor "k" bezeichnet wird, als das Verhältnis des Magnetfeldes bzw. der Stärke des Magnetfeldes 55 an der Position des ersten Magnetfeldsensors 1 zu dem Magnetfeld bzw. der Stärke des Magnetfeldes 55 an der Position des zweiten Magnetfeldsensors 2 berechnet werden. Dabei ist der vorbestimmte Faktor "k" größer als 1. Das heißt, dass die Stärke des Magnetfeldes 55 an der Position des zweiten Magnetfeldsensors 2 kleiner als die Stärke des Magnetfeldes 55 an der Position des ersten Magnetfeldsensors 1 und zwar um den vorbestimmten Faktor "k" ist, der abhängig vom Abstand 12 zwischen dem ersten Magnetfeldsensor 1 und dem zweiten Magnetfeldsensor 2 und der Breite 513 des magnetisierten Bereichs 51 ist. Da die Stärke des Magnetfeldes 55 proportional zum auf die Welle 55 aufgebrachten Drehmoment ist, kann das Drehmoment beispielsweise durch das Messsignal des ersten Magnetfeldsensors 1 bestimmt werden. Der vorbestimmte Parameter "k" entspricht in vorteilhafter Weise dem Verhältnis des Magnetfeldes bzw. der Stärke des Magnetfeldes 55 an der Position des ersten Magnetfeldsensors 1 zu dem Magnetfeld bzw. der Stärke des Magnetfeldes 55 an der Position des zweiten Magnetfeldsensors 2 (k ist größer als 1).

Wenn allerdings im Umfeld der Welle 5 ein Magnetstörfeld existiert, umfasst das jeweilige Messsignal des ersten Magnetfeldsensors 1 oder des zweiten Magnetfeldsensors 2 sowohl die Stärke des durch den magnetisierten Bereich 51 der Welle 5 erzeugten Magnetfeldes 55 als auch eine Stärke des Magnetstörfeldes an der jeweiligen Position des ersten Magnetfeldsensors 1 oder des zweiten Magnetfeldsensors 2.

Mit anderen Worten messen der erste Magnetfeldsensor 1 und der zweite Magnetfeldsensor 2 an ihrer jeweiligen Position, eine Stärke eines Magnetfeldes, welches bei einer Drehmomentbelastung der Welle 5 eine Überlappung des Magnetfeldes 55 des magnetisierten Bereichs 1 mit dem Magnetstörfeld ist.

Wenn das Magnetstörfeld homogen ist, d.h., wenn die Stärke des Magnetstörfeldes an der Position des ersten Magnetfeldsensors 1 gleich mit dessen Stärke an der Position des zweiten Magnetfeldsensors 2 ist, können aufgrund der vorgeschlagenen Anordnung der Magnetfeldsensoren 1, 2 zueinander und zur Welle 5 die Messsignale des ersten Magnetfeldsensors 1 und des zweiten Magnetfeldsensors 2 derart kombiniert werden, dass das Magnetstörfeld gemessen und kompensiert wird. Somit kann auch das auf die Welle 5 aufgebrachte Drehmoment gemessen werden.

Insbesondere kann das Drehmoment gemäß der folgenden Formel bestimmt werden:

$$M1 = MS1 - ((MS1 - k* MS2)/(1-k))$$

wobei "M1" das Drehmoment, "MS1" das erste Messsignal des ersten Magnetfeldsensors, "MS2" das zweite Messsignal des zweiten Magnetfeldsensors und "k" der zuvor erwähnte vorbestimmte Faktor ist.

Aus der obigen Formel stellt man fest, dass, da MS1 und MS2 eine Stärke eines Magnetfeldes im Umfeld der Welle 5 bezeichnen und der vorbestimmte Faktor "k" dimensionlos ist, auch M1 die Einheit einer Stärke eines Magnetfeldes aufweist. Da das Drehmoment, das auf die Welle 5 wirkt, proportional zu M1 ist, kann somit das Drehmoment bestimmt werden.

Anhand der Beschreibung des ersten Ausführungsbeispiels ist ersichtlich, dass zum Bestimmen eines Drehmoments mittels des vorgeschlagenen magnetoelastischen Drehmomentsensors 10 im Falle eines vorhandenen homogenen Magnetstörfeldes im Umfeld des magnetoelastischen Drehmomentsensors 10 nur ein magnetisierter Bereich, nämlich der magnetisierte Bereich 51, nötig ist. Da auf einen zweiten magnetisierten Bereich verzichtet werden kann, wird somit eine sehr kompakte Ausgestaltung des magnetoelastischen Drehmomentsensors 10 in der Axialrichtung 111 erzielt.

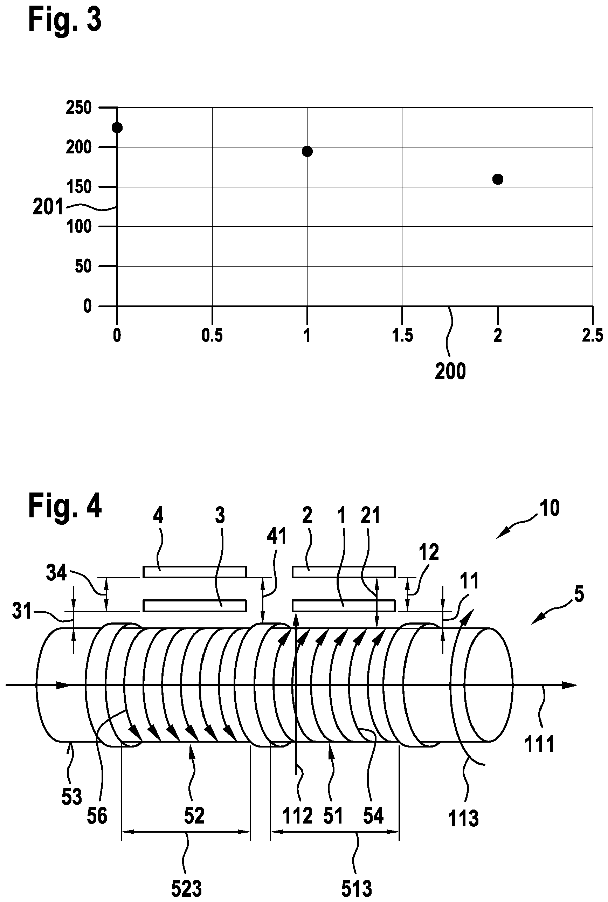

Figur 3 zeigt ein Diagramm der Stärke eines beispielhaften Magnetfeldes 55 im Umfeld der Welle 5 des magnetoelastischen Drehmomentsensors in Abhängigkeit von einem Abstand von einer Wellenmantelfläche 53.

Die x-Achse 200 bezeichnet den Abstand von der Wellenmantelfläche 53 in mm, wobei die y-Achse 201 die Stärke des Magnetfeldes 55 in µT bezeichnet.

Insbesondere sind im Diagramm von Figur 3 drei Messungen der Stärke des Magnetfeldes 55 dargestellt, an den Positionen 0 mm, 1 mm und 2 mm von der Wellenmantelfläche 53.

In diesem Beispiel sinkt zwischen 1 mm und 2 mm die Stärke des Magnetfeldes 55 von 198 µT auf 158 µT.

Das heißt, dass bei einem ersten Abstand 11 des ersten Magnetfeldsensors 1 gleich mit 1 mm und einem zweiten Abstand 21 des zweiten Magnetfeldsensors 2 gleich mit 2 mm der vorbestimmte Faktor "k" ca. 1,25 beträgt.

Der vorbestimmte Faktor "k" kann vorher oder bei der Kalibrierung des magnetoelastischen Drehmomentsensors 10 bestimmt werden.

Figur 4 zeigt eine schematische Ansicht eines zweiten Ausführungsbeispiels der erfindungsgemäßen magnetoelastischen Drehmomentsensors 10.

Der magnetoelastische Drehmomentsensor 10 gemäß dem zweiten Ausführungsbeispiel umfasst einen ersten Magnetfeldsensor 1, einen zweiten Magnetfeldsensor 2, einen dritten Magnetfeldsensor 3 und einen vierten Magnetfeldsensor 4. Ferner ist in der Welle 3 ein erster magnetisierter Bereich 51 und ein zweiter magnetisierter Bereich 52 gebildet.

Hierbei sind der erste Magnetfeldsensor 1 und der zweite Magnetfeldsensor 2 wie der erste Magnetfeldsensor 1 und der zweite Magnetfeldsensor 2 des magnetoelastischen Drehmomentsensors 10 gemäß dem ersten Ausführungsbeispiel ausgebildet. Entsprechend ist der erste magnetisierte Bereich 51 im magnetoelastischen Drehmomentsensor 10 gemäß dem zweiten Ausführungsbeispiel wie der magnetisierte Bereich 51 des magnetoelastischen Drehmomentsensors 10 gemäß dem ersten Ausführungsbeispiel ausgebildet. Daher werden zur Vermeidung von Wiederholungen nachfolgend nur die Unterschiede zum ersten Ausführungsbeispiel beschrieben.

Betrachtet man in Figur 4 die Feldlinien 54 des ersten magnetisierten Bereichs 51 und die Feldlinien 56 des zweiten magnetisierten Bereichs 52, stellt man fest, dass der zweite magnetisierte Bereich 52 und der erste magnetisierte Bereich 51 entgegengesetzte Magnetisierungen aufweisen. Dabei sind die Beträge der Magnetisierungen des ersten magnetisierten Bereichs 51 und des zweiten magnetisierten Bereichs 52 in vorteilhafter Weise gleich.

Figur 4 ist ferner zu entnehmen, dass der dritte Magnetfeldsensor 3 und der vierte Magnetfeldsensor 4 in der Axialrichtung 111 und der Umfangsrichtung 113 relativ zur Welle 5 an derselben Position angeordnet sind.

In der Radialrichtung 112 sind der dritte Magnetfeldsensor 3 in einem dritten Abstand 31 zu der Wellenmantelfläche 53 und der vierte Magnetfeldsensor 4 in einem vierten Abstand 41 zu der Wellenmantelfläche 53 angeordnet. Dabei ist der dritte Abstand 31 kleiner als der vierte Abstand 41.

Der dritte Abstand 31 beträgt 0,1 mm bis 1,5 mm, wobei der vierte Abstand 41 1,5 mm bis 6,5 mm beträgt. Ein Abstand 34 zwischen dem dritten Magnetfeldsensor 3 und dem vierten Magnetfeldsensor 4 beträgt 1 mm bis 5 mm, bevorzugt 1,5 mm bis 2,5 mm, besonders bevorzugt 2 mm.

Insbesondere ist der dritte Abstand 31 gleich mit dem ersten Abstand 11. Entsprechend ist der vierte Abstand 41 gleich mit dem zweiten Abstand 21. Somit ist auch der Abstand 34 zwischen dem dritten Magnetfeldsensor 3 und dem vierten Magnetfeldsensor 4 gleich mit dem Abstand 12 zwischen dem ersten Magnetfeldsensor 1 und dem zweiten Magnetfeldsensor 2.

Der zweite magnetisierte Bereich 52 weist in der Axialrichtung 111 der Welle 5 eine Breite 522 auf, die zwischen 5 mm und 10 mm beträgt. Insbesondere ist die Breite 523 des zweiten magnetisierten Bereichs 52 gleich mit der Breite 513 des ersten magnetisierten Bereichs 51.

Hinsichtlich der Anordnung des Paares aus dem dritten Magnetfeldsensor 3 und dem vierten Magnetfeldsensor 4 relativ zum Paar aus dem ersten Magnetfeldsensor 1 und dem zweiten Magnetfeldsensor 2 geht aus Figur 4 hervor, dass die beiden Paare in der Umfangsrichtung 113 an derselben Position relativ zur Welle 5 angeordnet sind. In der Axialrichtung 111 sind die beiden Paare relativ zur Welle 5 an unterschiedlichen Stellen angeordnet, so dass das Paar aus dem ersten Magnetfeldsensor 1 und dem zweiten Magnetfeldsensor 2 dem ersten magnetisierten Bereich 1 und das Paar aus dem dritten Magnetfeldsensor 3 und dem vierten Magnetfeldsensor 4 dem zweiten magnetisierten Bereich 2 zugeordnet sind.

Entsprechend zu dem ersten Magnetfeldsensor 1 und dem zweiten Magnetfeldsensor 2 sind der dritte Magnetfeldsensor 3 und der vierte Magnetfeldsensor 4 ebenfalls jeweils eingerichtet, eine Stärke, insbesondere eine magnetische Flussdichte, eines Magnetfeldes zu erfassen.

Insbesondere kann durch den dritten Magnetfeldsensor 3 und den vierten Magnetfeldsensor 4 an ihrer jeweiligen Position eine Stärke, insbesondere eine magnetische Flussdichte, eines Magnetfeldes erfasst werden, welches ein durch den zweiten magnetisierten Bereich 52 bei einer Drehmomentbelastung der Welle 5 erzeugtes Magnetfeld und/oder ein Magnetstörfeld umfasst.

Analog zum magnetoelastischen Drehmomentsensor 10 des ersten Ausführungsbeispiels kann auch der magnetoelastische Drehmomentsensor 10 gemäß dem zweiten Ausführungsbeispiel zum Bestimmen eines auf die Welle 5 wirkenden Drehmoments benutzt werden, wenn ein homogenes Magnetstörfeld im Umfeld des Drehmomentsensors 10 vorliegt. Dazu kann das mit Bezug auf den magnetoelastischen Drehmomentsensor 10 des ersten Ausführungsbeispiels zuvor beschriebene Verfahren für das Paar aus dem ersten Magnetfeldsensor 1 und dem zweiten Magnetfeldsensor 2 und/oder das Paar aus dem dritten Magnetfeldsensor 3 und dem vierten Magnetfeldsensor 4 angewandt werden.

Der magnetoelastische Drehmomentsensor 10 gemäß dem zweiten Ausführungsbeispiel weist allerdings den zusätzlichen Vorteil auf, dass auch inhomogene Magnetstörfelder, insbesondere Magnetstörfeldgradienten, kompensiert und gemessen werden können, so dass ein auf die Welle 5 aufgebrachtes Drehmoment gemessen werden kann.

Dazu können ein erstes Messsignal MS1 des ersten Magnetfeldsensors 1, ein zweites Messsignal MS2 des zweiten Magnetfeldsensors 2, ein drittes Messsignal MS3 des dritten Magnetfeldsensors 3 und ein viertes Messsignal MS4 des vierten Magnetfeldsensors 4 des magnetoelastischen Drehmomentsensors 10 erfasst werden.

Insbesondere wenn ein Magnetstörfeldgradient zwischen der Position des ersten Magnetfeldsensors 1 und der Position des zweiten Magnetfeldsensors 2 und ein Magnetstörfeldgradient zwischen der Position des dritten Magnetfeldsensors 3 und des vierten Magnetfeldsensors 4 gleich sind, kann das Drehmoment aus dem ersten Magnetfeldsensor gemäß der Formel

$$M1 = MS1 - ((MS1 - k* MS2) /(1-k)) - (MS3 - ((MS3 - k* MS4) /(1-k)))$$

bestimmt werden.

Dabei ist "k" ein vorbestimmter Faktor, der von der relativen Anordnung des ersten Magnetfeldsensors 1 und des zweiten Magnetfeldsensors 2 zueinander und/oder der relativen Anordnung des dritten Magnetfeldsensors 3 und des vierten Magnetfeldsensors 4 zueinander abhängig ist. M1, MS1, MS2, MS3 und MS4 sind in einer eine Stärke eines Magnetfeldes definierenden Einheit, beispielsweise $\mu T$, ausgedrückt. Dabei ist das Drehmoment M1 als eine Magnetstärke des durch den ersten magnetisierten Bereich 51 entstehenden Magnetfeldes ausgedrückt, da diese Magnetstärke analog zum auf die Welle 5 aufgebrachten Drehmoment ist. Somit kann das auf die Welle 5 aufgebrachte Drehmoment aus der Magnetstärke des Magnetfeldes an der Position des ersten Magnetfeldsensors 1 berechnet werden. Dabei können die Beträge der Magnetisierungen des ersten magnetisierten Bereichs 51 und der Magnetisierung des zweiten magnetisierten Bereichs 52 gleich groß sein. Dann gilt aufgrund der entgegengesetzten Magnetisierungen des ersten magnetisierten Bereichs 51 und des zweiten magnetisierten Bereichs 52: M1 = - M3. Es ist allerdings auch möglich, dass die Beträge der Magnetisierungen des ersten magnetisierten Bereichs 51 und der Magnetisierung des zweiten magnetisierten Bereichs 52 unterschiedlich groß sind. Der vorbestimmte Faktor "k" im zweiten Ausführungsbeispiel wird analog zum vorbestimmten Faktor "k" im ersten Ausführungsbeispiel der Erfindung berechnet. Insbesondere wird der vorbestimmte Faktor "k" im zweiten Ausführungsbeispiel als das Verhältnis des Magnetfeldes bzw. der Stärke des Magnetfeldes 55 an der Position des ersten Magnetfeldsensors 1 zu dem Magnetfeld bzw. der Stärke des Magnetfeldes 55 an der Position des zweiten Magnetfeldsensors 2 und/oder als das Verhältnis des Magnetfeldes bzw. der Stärke des Magnetfeldes 55 an der Position des dritten Magnetfeldsensors 3 zu dem Magnetfeld bzw. der Stärke des Magnetfeldes 55 an der Position des vierten Magnetfeldsensors 4 berechnet. Dabei ist der vorbestimmte Faktor "k" größer als 1.

Somit kann mittels des magnetoelastischen Drehmomentsensors 10 gemäß dem zweiten Ausführungsbeispiel, der nur zwei magnetisierte Bereiche 51, 52 aufweist, ein auf die Welle 5 ausgeübtes Drehmoment auch im Falle eines Magnetstörfeldgradienten im Umfeld des Drehmomentsensors 10 bestimmt werden. Da auf einen dritten magnetisierten Bereich verzichtet werden kann, der anderenfalls zum Kompensieren eines Magnetstörfeldgradienten nötig wäre, weist der magnetoelastische Drehmomentsensor 10 gemäß dem zweiten Ausführungsbeispiel eine kompakte Ausdehnung in der Axialrichtung 111 auf.

Figur 4 zeigt ein mit Muskelkraft und/oder Motorkraft betreibbares Fahrzeug 100 mit einem magnetoelastischen Drehmomentsensor 10 gemäß einem der beschriebenen Ausführungsbeispiele.

Bei dem Fahrzeug 100 handelt es sich insbesondere um ein Elektrofahrrad, das zur Unterstützung einer Tretkraft eines Fahrers mit einem elektrischen Antrieb 101 versehen. Der elektrische Antrieb 101 ist an einem Kurbeltrieb 102 mit einer ersten Kurbel 103 und einer zweiten Kurbel 104 und wird von einem Akku 105 mit elektrischer Energie versorgt.

Ein zuvor beschriebener magnetoelastischer Drehmomentsensor 10 gemäß dem ersten Ausführungsbeispiel oder dem zweiten Ausführungsbeispiel kann beispielsweise am Kurbeltrieb 102 angeordnet sein, um das vom Fahrer erzeugte und auf den Kurbeltrieb 102 aufgebrachte Drehmoment zu messen. Somit kann der elektrische Antrieb 101 unter Berücksichtigung des vom Fahrer erzeugten Drehmoments gesteuert werden.

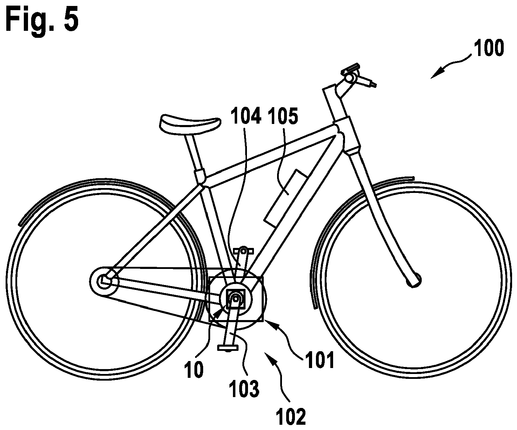

Neben der vorstehenden schriftlichen Beschreibung der Erfindung wird zu deren ergänzender Offenbarung hiermit explizit auf die zeichnerische Darstellung der Erfindung in den Fig. 1 bis 5 Bezug genommen.

**Patentansprüche**

**1.** Magnetoelastischer Drehmomentsensor (10), umfassend:

- eine Welle (5) mit einem ersten magnetisierten Bereich (51) und einem zweiten magnetisierten Bereich (52) wobei die Welle (5) eine Axialrichtung (111), eine Radialrichtung (112) und eine Umfangsrichtung (113) aufweist, und

- wobei der erste magnetisierte Bereich (51) und der zweite magnetisierte Bereich (52) entgegengesetzte Magnetisierungen aufweisen, und

- einen ersten Magnetfeldsensor (1),einen zweiten Magnetfeldsensor (2), einen dritten Magnetfeldsensor (3) und einen vierten Magnetfeldsensor (4), die jeweils eingerichtet sind, eine Stärke eines Magnetfeldes zu erfassen,

- wobei der erste Magnetfeldsensor (1) und der zweite Magnetfeldsensor (2) in der Axialrichtung (111) und der Umfangsrichtung (113) relativ zur Welle (5) an derselben Position angeordnet sind, und

- wobei der dritte Magnetfeldsensor (3) und der vierte Magnetfeldsensor (4) in der Axialrichtung (111) und der Umfangsrichtung (113) relativ zur Welle (5) an derselben Position angeordnet sind, und

- wobei in der Radialrichtung (112) der erste Magnetfeldsensor (1) in einem ersten Abstand (11) zu einer Wellenmantelfläche (53) und der zweite Magnetfeldsensor (2) in einem zweiten Abstand (21) zu der Wellenmantelfläche (53) angeordnet sind, wobei der erste Abstand (11) kleiner als der zweite Abstand (21) ist und

- wobei in der Radialrichtung (112) der dritte Magnetfeldsensor (51) in einem dritten Abstand (31) zu der Wellenmantelfläche (53) und der vierte Magnetfeldsensor (4) in einem vierten Abstand (41) zu der Wellenmantelfläche (53) angeordnet sind, wobei der dritte Abstand (31) kleiner als der vierte Abstand (41) ist, **dadurch gekennzeichnet, dass**

der erste Magnetfeldsensor (1) und der zweite Magnetfeldsensor (2) dem ersten magnetisierten Bereich (51) zugeordnet sind und wobei der dritte Magnetfeldsensor (3) und der vierte Magnetfeldsensor (4) dem zweiten magnetisierten Bereich (52) zugeordnet sind

2. Magnetoelastischer Drehmomentsensor (10) nach Anspruch 1, wobei eine Position des dritten Magnetfeldsensors (3) und des vierten Magnetfeldsensors (4) in der Umfangsrichtung (113) relativ zur Welle (5) gleich mit einer Position des ersten Magnetfeldsensors (1) und des zweiten Magnetfeldsensors (2) in der Umfangsrichtung (113) relativ zur Welle (5) ist und/oder wobei eine Position des dritten Magnetfeldsensors (3) und des vierten Magnetfeldsensors (4) in der Axialrichtung (111) relativ zur Welle (5) und eine Position des ersten Magnetfeldsensors (1) und des zweiten Magnetfeldsensors (2) in der Axialrichtung (111) relativ zur Welle (5) unterschiedlich voneinander sind.

3. Magnetoelastischer Drehmomentsensor (10) nach Anspruch 1 oder 2, wobei ein Abstand (12) zwischen dem ersten Magnetfeldsensor (1) und dem zweiten Magnetfeldsensor (2) 1 mm bis 5 mm, bevorzugt 1,5 mm bis 2,5 mm, besonders bevorzugt 2 mm, beträgt und/oder ein Abstand (34) zwischen dem dritten Magnetfeldsensor (3) und dem vierten Magnetfeldsensor (4) 1 mm bis 5 mm, bevorzugt 1,5 mm bis 2,5 mm, besonders bevorzugt 2 mm, beträgt.

4. Magnetoelastischer Drehmomentsensor (10) nach einem der vorherigen Ansprüche, wobei der erste Abstand (11) und/oder der dritte Abstand (31) 0,1 mm bis 1,5 mm beträgt/betragen.

5. Magnetoelastischer Drehmomentsensor (10) nach einem der vorherigen Ansprüche, wobei der zweite Abstand (21) und/oder der vierte Abstand (41) 1,5 mm bis 6,5 mm beträgt/betragen.

6. Magnetoelastischer Drehmomentsensor (10) nach einem der vorherigen Ansprüche, wobei der erste Abstand (11) gleich mit dem dritten Abstand (31) ist.

7. Magnetoelastischer Drehmomentsensor (10) nach einem der vorherigen Ansprüche, wobei der zweite Abstand (21) gleich mit dem vierten Abstand (41) ist.

8. Tretachse, insbesondere eines Fahrzeugs (100), mit einem magnetoelastischen Drehmomentsensor (10) nach einem der Ansprüche 1 bis 7, wobei insbesondere vorgesehen ist, dass der Drehmomentsensor (10) ein integrales Bauelement der Tretachse ist.

9. Antriebseinheit für ein Fahrzeug, insbesondere ein Zweirad, mit einem elektromagnetoelastischen Drehmomentsensor (10) nach einem der Ansprüche 1 bis 7, wobei insbesondere vorgesehen ist, dass der Drehmomentsensor (10) ein integrales Bauelement der Antriebseinheit ist.

10. Fahrzeug (100), umfassend einen magnetoelastischen Drehmomentsensor (10) nach einem der Ansprüche 1 bis 7 oder einer Tretachse nach Anspruch 8 oder einer Antriebseinheit nach Anspruch 9.

11. Fahrzeug (100) nach Anspruch 10, welches elektrisch und/oder mit Muskelkraft betreibbar ist und einen Kurbeltrieb (102) aufweist, wobei der magnetoelastische Drehmomentsensor (10) am Kurbeltrieb (102) angeordnet ist.

**Claims**

1. Magnetoelastic torque sensor (10), comprising:

   - a shaft (5) with a first magnetized region (51) and a second magnetized region (52), wherein the shaft (5) has an axial direction (111), a radial direction (112) and a circumferential direction (113), and
   - wherein the first magnetized region (51) and the second magnetized region (52) have opposite magnetizations, and
   - a first magnetic field sensor (1), a second magnetic field sensor (2), a third magnetic field sensor (3) and a fourth magnetic field sensor (4), which are respectively set up to sense a strength of a magnetic field,
   - wherein the first magnetic field sensor (1) and the second magnetic field sensor (2) are arranged at the same position in relation to the shaft (5) in the axial direction (111) and the circumferential direction (113), and
   - wherein the third magnetic field sensor (3) and the fourth magnetic field sensor (4) are arranged at the same position in relation to the shaft (5) in the axial direction (111) and the circumferential direction (113), and
   - wherein, in the radial direction (112), the first magnetic field sensor (1) is arranged at a first distance (11) from a shaft lateral surface (53) and the second magnetic field sensor (2) is arranged at a second distance (21) from the shaft lateral surface (53), wherein the first distance (11) is less than the second distance (21) and
   - wherein, in the radial direction (112), the third magnetic field sensor (51) is arranged at a third distance (31) from the shaft lateral surface (53) and the fourth magnetic field sensor (4) is arranged at a fourth distance (41) from the shaft lateral surface (53), wherein the third distance (31) is less than the fourth distance (41), **characterized in that**

   the first magnetic field sensor (1) and the second magnetic field sensor (2) are assigned to the first magnetized region (51) and wherein the third magnetic field sensor (3) and the fourth magnetic field sensor (4) are assigned to the second magnetized region (52).

2. Magnetoelastic torque sensor (10) according to Claim 1, wherein a position of the third magnetic field sensor (3) and of the fourth magnetic field sensor (4) in relation to the shaft (5) in the circumferential direction (113) is the same as a position of the first magnetic field sensor (1) and of the second magnetic field sensor (2) in relation to the shaft (5) in the circumferential direction (113) and/or wherein a position of the third magnetic field sensor (3) and of the fourth magnetic field sensor (4) in relation to the shaft (5) in the axial direction (111) and a position of the first magnetic field sensor (1) and of the second magnetic field sensor (2) in relation to the shaft (5) in the axial direction (111) are different from one another.

3. Magnetoelastic torque sensor (10) according to Claim 1 or 2, wherein a distance (12) between the first magnetic field sensor (1) and the second magnetic field sensor (2) is 1 mm to 5 mm, preferably 1.5 mm to 2.5 mm, particularly preferably 2 mm, and/or a distance (34) between the third magnetic field sensor (3) and the fourth magnetic field sensor (4) is 1 mm to 5 mm, preferably 1.5 mm to 2.5 mm, particularly preferably 2 mm.

4. Magnetoelastic torque sensor (10) according to one of the preceding claims, wherein the first distance (11) and/or the third distance (31) is/are 0.1 mm to 1.5 mm.

5. Magnetoelastic torque sensor (10) according to one of the preceding claims, wherein the second distance (21) and/or the fourth distance (41) is/are 1.5 mm to 6.5 mm.

6. Magnetoelastic torque sensor (10) according to one of the preceding claims, wherein the first distance (11) is the same as the third distance (31).

7. Magnetoelastic torque sensor (10) according to one of the preceding claims, wherein the second distance (21) is the same as the fourth distance (41).

8. Pedal crank axle, in particular of a vehicle (100), with a magnetoelastic torque sensor (10) according to one of Claims 1 to 7, wherein it is provided in particular that the torque sensor (10) is an integral component of the pedal crank axle.

9.  Drive unit for a vehicle, in particular a two-wheeled vehicle, with an electromagnetoelastic torque sensor (10) according to one of Claims 1 to 7, wherein it is provided in particular that the torque sensor (10) is an integral component of the drive unit.

10. Vehicle (100), comprising a magnetoelastic torque sensor (10) according to one of Claims 1 to 7 or a pedal crank axle according to Claim 8 or a drive unit according to Claim 9.

11. Vehicle (100) according to Claim 10, which can be operated electrically and/or by muscle power and has a crank drive (102), wherein the magnetoelastic torque sensor (10) is arranged on the crank drive (102).


**Revendications**

1.  Capteur de couple de rotation magnéto-élastique (10), comprenant :

    - un arbre (5) ayant une première zone magnétisée (51) et une deuxième zone magnétisée (52), l'arbre (5) ayant une direction axiale (111), une direction radiale (112) et une direction circonférentielle (113), et
    - la première zone magnétisée (51) et la deuxième zone magnétisée (52) ayant des magnétisations opposées, et
    - un premier capteur de champ magnétique (1),un deuxième capteur de champ magnétique (2), un troisième capteur de champ magnétique (3) et un quatrième capteur de champ magnétique (4), qui sont chacun agencés de façon à détecter une intensité d'un champ magnétique,
    - le premier capteur de champ magnétique (1) et le deuxième capteur de champ magnétique (2) sont agencés dans la même position dans la direction axiale (111) et la direction circonférentielle (113) par rapport à l'arbre (5), et
    - le troisième capteur de champ magnétique (3) et le quatrième capteur de champ magnétique (4) sont agencés dans la même position dans la direction axiale (111) et la direction circonférentielle (113) par rapport à l'arbre (5), et,
    - dans la direction radiale (112), le premier capteur de champ magnétique (1) est agencé à une première distance (11) d'une surface d'enveloppe d'arbre (53) et le deuxième capteur de champ magnétique (2) est agencé à une deuxième distance (21) de la surface d'enveloppe d'arbre (53), la première distance (11) étant inférieure à la deuxième distance (21), et,
    - dans la direction radiale (112), le troisième capteur de champ magnétique (51) est agencé à une troisième distance (31) de la surface d'enveloppe d'arbre (53) et le quatrième capteur de champ magnétique (4) est agencé à une quatrième distance (41) de la surface d'enveloppe d'arbre (53), la troisième distance (31) étant inférieure à la quatrième distance (41), **caractérisé en ce que**

    le premier capteur de champ magnétique (1) et le deuxième capteur de champ magnétique (2) sont associés à la première zone magnétisée (51), et le troisième capteur de champ magnétique (3) et le quatrième capteur de champ magnétique (4) sont associés à la deuxième zone magnétisée (52).

2.  Capteur de couple de rotation magnéto-élastique (10) selon la revendication 1, dans lequel une position du troisième capteur de champ magnétique (3) et du quatrième capteur de champ magnétique (4) dans la direction circonférentielle (113) par rapport à l'arbre (5) est égale à une position du premier capteur de champ magnétique (1) et du deuxième capteur de champ magnétique (2) dans la direction circonférentielle (113) par rapport à l'arbre (5) et/ou dans lequel une position du troisième capteur de champ magnétique (3) et du quatrième capteur de champ magnétique (4) dans la direction axiale (111) par rapport à l'arbre (5) et une position du premier capteur de champ magnétique (1) et du deuxième capteur de champ magnétique (2) dans la direction axiale (111) par rapport à l'arbre (5) sont différentes l'une de l'autre.

3.  Capteur de couple de rotation magnéto-élastique (10) selon la revendication 1 ou 2, dans lequel une distance (12) entre le premier capteur de champ magnétique (1) et le deuxième capteur de champ magnétique (2) est de 1 mm à 5 mm, de préférence de 1,5 mm à 2,5 mm, de manière particulièrement préférée de 2 mm, et/ou une distance (34) entre le troisième capteur de champ magnétique (3) et le quatrième capteur de champ magnétique (4) est de 1 mm à 5 mm, de préférence de 1,5 mm à 2,5 mm, de manière particulièrement préférée de 2 mm.

4.  Capteur de couple de rotation magnéto-élastique (10) selon l'une des revendications précédentes, dans lequel la première distance (11) et/ou la troisième distance (31) est/sont de 0,1 mm à 1,5 mm.

**5.** Capteur de couple de rotation magnéto-élastique (10) selon l'une des revendications précédentes, dans lequel la deuxième distance (21) et/ou la quatrième distance (41) est/sont de 1,5 mm à 6,5 mm.

**6.** Capteur de couple de rotation magnéto-élastique (10) selon l'une des revendications précédentes, dans lequel la première distance (11) est égale à la troisième distance (31).

**7.** Capteur de couple de rotation magnéto-élastique (10) selon l'une des revendications précédentes, dans lequel la deuxième distance (21) est égale à la quatrième distance (41).

**8.** Axe de pédalier, notamment d'un véhicule (100), comportant un capteur de couple de rotation magnéto-élastique (10) selon l'une des revendications 1 à 7, dans lequel il est notamment prévu que le capteur de couple de rotation (10) est un composant formant partie intégrante de l'axe de pédalier.

**9.** Unité d'entraînement pour un véhicule, en particulier un deux-roues, avec un capteur de couple de rotation magnéto-élastique (10) selon l'une des revendications 1 à 7, dans laquelle il est notamment prévu que le capteur de couple de rotation (10) est un composant formant partie intégrante de l'unité d'entraînement.

**10.** Véhicule (100) comprenant un capteur de couple de rotation magnéto-élastique (10) selon l'une des revendications 1 à 7 ou un axe de pédalier selon la revendication 8 ou une unité d'entraînement selon la revendication 9.

**11.** Véhicule (100) selon la revendication 10, qui est apte à être actionné électriquement et/ou par la force musculaire et qui présente un mécanisme à pédales (102), le capteur de couple de rotation magnéto-élastique (10) étant agencé sur le mécanisme à pédales (102).

**Fig. 1**

**Fig. 2**

# Fig. 3

# Fig. 4

**Fig. 5**

100

104 105

10

103

101

102

**IN DER BESCHREIBUNG AUFGEFÜHRTE DOKUMENTE**

**In der Beschreibung aufgeführte Patentdokumente**

- WO 02068922 A
- EP 3232172 A
- EP 3708988 A